# EUROPEAN PATENT SPECIFICATION

(11) **EP 1 171 966 B1**
(45) Date of publication and mention of the grant of the patent: **01.09.2004**
(21) Application number: 00921973.4
(22) Date of filing: 10.04.2000
(51) Int. Cl.: H04B 7/185

(54) **INTEGRATED HIGH SPEED TERRESTRIAL & SATELLITE COMMUNICATIONS SYSTEMS FOR INTERNET & OTHER USES**
INTEGRIERTE TERRESTRISCHE UND SATELLITEN GESTÜTZTE HOCHGESCHWINDIGKEITSKOMMUNIKATIONSSYSTEME FÜR INTERNET UND SONSTIGE ANWENDUNGEN
SYSTEMES INTEGRES, A GRANDE VITESSE, DE COMMUNICATIONS TERRESTRE ET PAR SATELLITE, DESTINES AU RESEAU INTERNET ET A D'AUTRES RESEAUX

(30) Priority: 08.04.1999 US 128610 P
(43) Date of publication of application: 16.01.2002
(73) Proprietor: Europe Online Networks, S.A., 6832 Betzorf (LU)
(72) Inventor: JOHNSON, Candace, L-1466 Luxembourg City (LU); LORD, Angus, L-1611 Luxembourg City (LU); MARTINEZ, Takeshi, Stephen, Damian, L-1611 Luxembourg City (LU)
(74) Representative: Naismith, Robert Stewart
(86) International application number: PCT/US2000/009496
(87) International publication number: WO 2000/060770

(56) References cited:
- WO-A-99/09707
- WO-A-99/16201
- US-A- 5 852 721
- HUNG A ET AL: "ATM VIA SATELLITE: A FRAMEWORK AND IMPLEMENTATION" WIRELESS NETWORKS,US,ACM, vol. 4, no. 2, 1 February 1998 (1998-02-01), pages 141-153, XP000741224 ISSN: 1022-0038
- CLAUSEN H D ET AL: "INTERNET SERVIVES VIA DIRECT BROADCAST SATELLITES" IEEE INTERNATIONAL PERFORMANCE, COMPUTING AND COMMUNICATIONS CONFERENCE,US,NEW YORK, IEEE, 5 February 1997 (1997-02-05), pages 468-475, XP000753714 ISBN: 0-7803-3874-X

## Description

### Claim of Priority

This case claims priority to USSN 60/1286 10, entitled Integrated High Speed Terrestrial and Satellite Communications Systems for Internet and Other Uses, and Filed on 8 April 1999, naming Candace M. Johnson, and Angus Lord and Takeshi Stephen Damian Martinez as amended, as inventors.

### Background of the Invention

### 1. Field of the Invention

The present application relates to systems and methods for managing the delivery of a plurality of types of data content to data users, and more particularly, to systems and methods for managing the allocation of bandwidth resources for the transmission and delivery of a plurality of types of data content to data users via a satellite telecommunications network.

### 2. Description of the Related Art

The growth of reasonably priced satellite communications services has led to the availability of a variety of wide band and narrow band communications services for millions of customers. Additionally, there has been an expansion in the number and variety of Internet services accessible by diverse users. To relate the satellite based communications services and the terrestrial Internet facilities, there is a need for an integrated high speed communications systems manager that can coordinate factors pertaining to connectivity, system structure, bandwidth and media format of requested data content comprised of differing data protocols.

A network communications systems ability to deliver data content to its data users is often constrained by the available bandwidth resources found within the system. The amount of bandwidth resources that can be made available to any individual data user within a network communications system is dependent upon such factors as the total bandwidth resources available within the system, the number of data users connected to the system, and the size of the data content being demanded by such data users at any given moment. The first factor, the amount of bandwidth resources found within a given network communication system, however, tends to be the single most important factor influencing the quality of service (in terms of the systems' ability to deliver data content in a timely fashion) experienced by the system's data users; other factors tend to only address how the system's available resources are to be allocated to meet the needs of its data users. The amount of bandwidth resources found within a given network can be constrained by both the physical properties of the medium over which the system's data content is delivered to its data users, and in the way in which the system transmits data content to its data users (note, however, that these factors are not generally wholly independent of each other).

These constraints on bandwidth resources can easily be seen in typical non-wireless terrestrial Internet communication networks. Data users can access data content found on the Internet through an Internet service provider. Commonly, the data user communicates with the Internet service provider and the holders of desired data content through normal telephone lines; a request for data content travels from the data user to the holder of the desired data content and then the holder transmits the data content to the requesting data user. This typical terrestrial Internet network system. however, suffers two drawbacks that constrain the amount of available bandwidth resources that the data user may utilize in obtaining the desired data content. First, the amount of bandwidth resources available to deliver data content in existing telephone lines is quite limited. Due to the physical properties of existing telephone lines, the ability to deliver data content to data users in a timely fashion - the amount of bandwidth resources available for a particular data user - particularly when a large number of data users are connected to the network system, may be quite constrained. Secondly, this typical non-wireless Internet network system is constrained in its ability to simultaneously deliver different data content to separate data users since these systems only deliver data content to any specific data user in response to that data user's request for data content. Non-wireless Internet communication networks are constrained in their ability to deliver data content, in other words, because they are unicast systems. With each data user's request for data content, the non-wireless Internet communication network system must allocate bandwidth resources to transmit the data content to the requesting data user.

### Prior Art Summary

International Patent Application Publication WO 99/16201 describes an asymmetric access satellite-based system that includes multicasting, caching, roaming, and Internet Protocol (IP) packet routing. International Patent Application Publication WO 99/09707 describes a system that can route data via either a network that supports Internet Protocol (IP) or a satellite transmission network. The system can route data via the IP network or the satellite transmission network based on a size of the data. HD. Clausen et al describe a system that uses direct broadcast satellites to downlink Internet data to user terminals in *Internet Services via Direct Broadcast Satellites,* IEEE International Performance Computing and Communications Conference, February 2-5, 1997, pps. 468-75 (1997). A. Hung et al describe framework for integrating satellite uplink access scheduling and asynchronous transfer mode (ATM) protocols in *ATM via satellite: A framework and an implementation,* Wireless Networks, vol. 4, pps. 141-153, (1998).

### Summary of the Invention

One objective of the present invention is to provide systems and methods that take advantage of the broadband resources available in satellite telecommunication network systems to deliver Internet Protocol (IP) data content to data users at rates of speed that may not be available in traditional terrestrially-based Internet communication networks. It is understood that satellite networks presently exist in the United States, Asia and Europe that were originally installed for television distribution broadcasting. As an example, the ASTRA satellite system in Europe currently provides television broadcast service to approximately twenty-five million homes. It is desirable to expand the use of satellite telecommunication networks by integrating them with the terrestrially-based Internet, thereby adding a new dimension of service for customers of satellite-delivered data content. It is an object of the present invention to provide a system that interrelates terrestrial Internet facilities having wide band distribution capabilities with a select number of satellite terminals linked to telecommunications satellites. It is understood that the term "Internet facility" includes both Internet service providers and Internet content providers.

An additional objective of the present invention is to provide systems and methods that are able to deliver non-Internet Protocol data content to data users by utilizing the broadband resources available in satellite telecommunication network systems. By utilizing the broadband resources available in satellite telecommunication network systems, the delivery of continuous streams of digital data content to data users, at rates of speed not achievable in traditional non-wireless communication networks, may be possible. For example, a MPEG4 stream of audio or video digital data content, such as MPEG4-formatted data, may be delivered to data users in this way. Similarly, non-IP, non-streaming digital data content can also be delivered to data users by utilizing the broadband resources available in satellite telecommunication network systems. Thus, the delivery of digital data content (i.e., file transfers) to data users can be conducted via satellite telecommunication networks at rates of speed which may not be achievable in a traditional non-wireless communication network.

Another objective of the present invention is to provide systems and methods that take advantage of the multicasting capabilities of satellite telecommunication network systems so as to be able to simultaneously deliver data content to a multitude of data users with a single transmission of the data content. Additionally, to take further advantage of the multicasting capabilities of satellite telecommunication networks, methods for queuing the delivery of digital data content to data users are disclosed in the present invention.

A further object of the present invention is to provide systems and methods for delivering a plurality of types of data content to data users via a satellite telecommunication network. To facilitate this, an integrated communications system manager may provide bi-directional control and signaling capability interconnecting a plurality of diverse bandwidth-originating communications networks, an integrated high speed data content manager and a distribution network. It is understood that a distribution network may comprise a plurality of distribution networks, some of which are dynamically established and disestablished in accordance with the requirements of customers and/or the dictates of an operating protocol. An advantageous aspect of a communications system would be a system manager that can direct the constitution of the aforesaid dynamic networks and that can coordinate their interrelation with other components of the communications system. A plurality of types of data content such as IP data packets, streaming digital data content and file transfers of stored digital data content. for example, could be delivered to and received by data users simultaneously in this way.

The systems and methods described herein allocate bandwidth resources for the delivery of a plurality of types of data content to data users via a satellite telecommunications network.

The above objectives are achieved by the system of claim 1 and the method of claim 8.

### Brief Description of the Drawings

The foregoing and other objects and advantages of the invention will be appreciated more fully from the following further description thereof, with reference to the accompanying drawings wherein;
Figure 1 depicts one embodiment of the invention to deliver a plurality of data content to data users via a satellite telecommunication network.
Figure 2 depicts a system for queuing and releasing digital data content in accordance with the invention.
Figure 3 depicts a typical allocation of a satellite telecommunication network's available bandwidth resources to differing types of data content.
Figure 4 depicts a functional block diagram of an embodiment of a system according to the present invention that interrelates terrestrial and satellite communications to deliver a plurality of types of data content.
Figure 5 depicts a block diagram of one embodiment of a data user terminal in accordance with the present invention.

### Detailed Description of the Illustrated Embodiments

To provide an overall understanding of the invention, certain illustrative embodiments will now be described. However, it will be understood by one of ordinary skill in the art that the systems and methods herein described can be adapted and modified without departing from the scope of the invention.

The systems and methods of the present invention create a new Internet capability that permits the worldwide distribution of media content at megabit bandwidth. Such an architecture can involve the integration and combination of current terrestrial Internet facilities with the wide spread availability of high speed information channels that is associated with the complex of satellite television distribution networks located throughout the world.

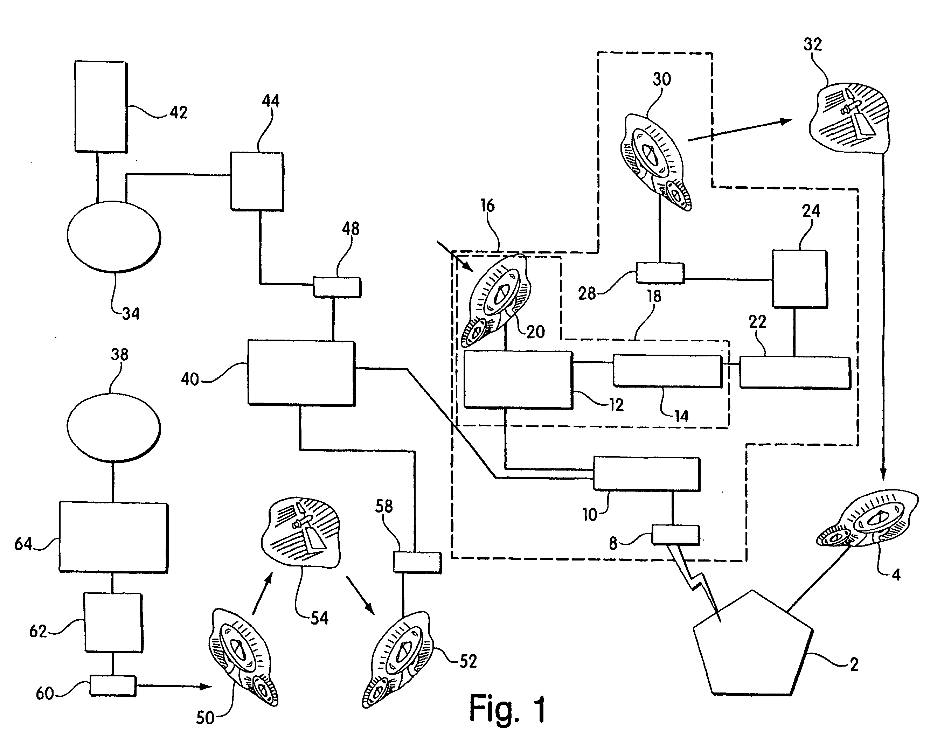

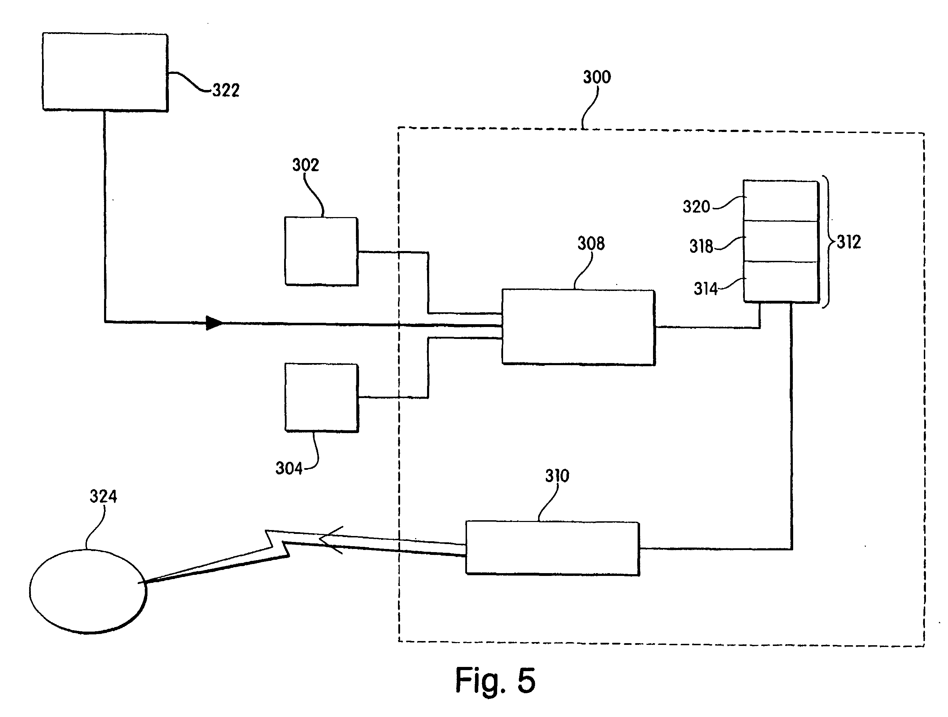

Figure 1 provides a block diagram of an illustrative embodiment of an integrated terrestrial/satellite architecture. According to one embodiment of the present invention, the interrelationships comprising the architecture are controlled and managed by a telecommunications facility 16, as shown in Figure 1. According to the depicted system, a plurality of types of data content may be delivered to at least one data user terminal 2. The plurality of types of data content deliverable to the at least one data user terminal may include, but is not limited to, Internet Protocol data content, streaming audio and video digital data content, and non-streaming digital data content. The data user terminal 2 may include, for example, a PC assembly, a standard television set equipped with a set top box mechanism, a laptop computer, or any other device capable of processing and displaying a plurality of types of data content. An arrangement of the data user terminal 2 is shown in more detail in Figure 5. The data user terminal 2 is adapted so as to be able to process and display the plurality of types of data content received by a ground-based satellite receiving antenna 4. The data user terminal 2 is interconnected via a communication device such as a modem (not shown) to a dial-up modem 8 providing an interface with the data user terminal 2 and the telecommunications facility 16. In one embodiment of the invention, the data user terminal 2 (and its modem) may interface directly with the dial-up modem 8 via a direct line dial-up connection. Alternatively, the data user terminal 2 (and its modem) may interface with modem 8 through the Internet via an Internet service provider. The telecommunications facility 16 can include a dial-up router 10 for routing data users requests for data content to a communications systems manager 18. The communications systems manager 18 as shown comprises of a data content manager 12 , an intermediate router/traffic shaper 14, a satellite antenna 20 and a satellite modem (not shown). The data content manager 12 is responsible for managing the data users' requests for differing types of data content and managing the reception of the received plurality of types of data content. The intermediate router/traffic shaper 14 is responsible for allocating the system's available bandwidth resources for the transmission of the plurality of types of data content received and directing the plurality of types of data content to a satellite gateway 22. In the illustrated embodiment, the communication systems manager 18 also includes a satellite antenna 20 and a satellite modem (not shown) so that the telecommunications facility 16 will be capable of receiving streams of digital data content delivered from a communications network and to direct the received digital data content to the data content manager 12. Optionally, this communications network may transmit streams of digital data content formatted in the MPEG4 protocol to the telecommunications facility 16.

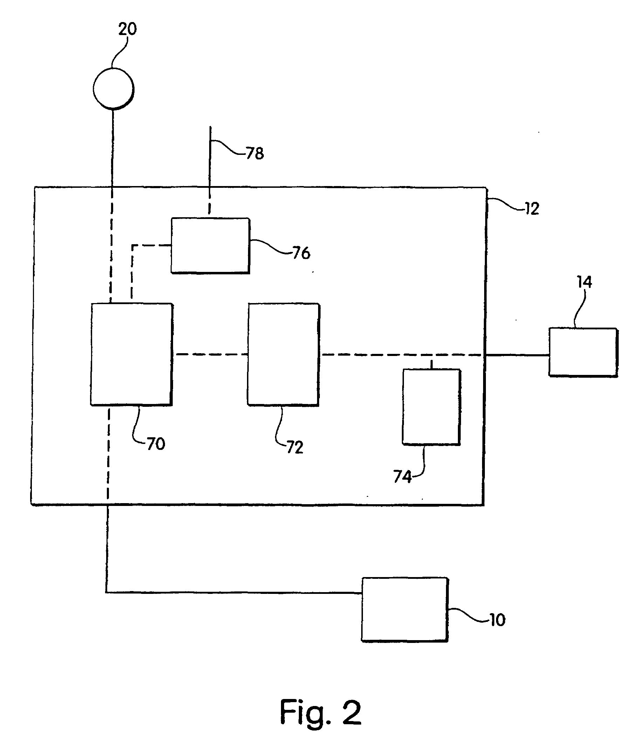

Figure 2 illustrates one embodiment of a data content manager 12 in accordance with the invention. The data content manager 12 shown comprises of a processor 70, a queuing engine 72, a generator 74, and a memory device 76. The processor 70 is responsible for controlling the received plurality of types of data content and for identifying digital data content to be placed in a queue for transmission. The processor 70 is capable of communicating with, and controlling, the queuing engine 72, the generator 74 and the memory device 76. The queuing engine 72 queues digital data content identified by the processor 70 to be queued, and releases the queued digital data content at predetermined times to the intermediate router/traffic shaper 14. The generator 74 generates messages to be broadcasted to data users informing them that a queued digital data content will be available for transmission at a predetermined time and inviting these data users to request the queued digital data content prior to the predetermined time for releasing the queued digital data content.

Although Figure 2 graphically depicts the processor 70, the queuing engine 72, a generator 74, and the memory device 76 of the data content manager 12 as functional block elements, it will be apparent to one of ordinary skill in the art that these elements can be realized as computer programs or portions of computer programs according to the invention. The data content manager 12 can be realized as a software component operating on a conventional data processing system such as a Unix workstation. In that embodiment, the data content manager 12 can be implemented as a C language computer program, or a computer program written in any high level language including C++, Fortran, Java or basic. Additionally, in an embodiment where microcontrollers or DSPs are employed, the data content manager 12 can be realized as a computer program written in microcode or written in a high level language and compiled down to microcode that can be executed on the platform employed.

Data content can be introduced into the processor 70 via three separate communications networks. While the illustrated embodiment depicts a preferred embodiment of the invention, it will be readily apparent to one skilled in the art, however, that the depicted embodiment may be modified or adapted without departing from the scope of the invention. The first communications network represents data content available on the Internet, which may be delivered to the processor 70 via the backbone router 40 and dial-up router 10 as discussed below. The second communications network comprises a network which generates streams of digital data content deliverable to the processor 70. This communications network may consist of streams of digital data content broadcasted via satellite communications as shown by the satellite antenna 20 in both Figures 1 and 2. The streams of digital data content, however, in accordance with the invention, need not be delivered to the processor 70 of the data content manager 12 via a satellite network. Streams of digital data content, for example, may be delivered to the processor 70 via a television cable broadcasting system. The third communications network comprises a network where digital data content is delivered to the processor 70. The digital data content of this network may be deliverable to the processor 70 of the data content manager 12 via a LAN (or equivalent) system connection 78, or the digital data content may be directly downloaded into a memory device 76 via a driver interface (not shown). The memory device 76 additionally may be utilized to store any data content delivered to the processor 70 from the first and second communications networks.

By controlling the queuing engine 72, the generator 74 and the memory device 76 via the processor 70, the data content manager 12 can control the delivery of the plurality of types of data content to the intermediate router/traffic shaper 14 for transmission to data users. A key feature of the data content manager 12 is its ability to queue digital data content for transmission to data users. For example, if data users wanted to download the latest version of an Internet browser engine, a data content which may be quite large, the data content manager 12 might queue the desired data content for a later transmission to data users. In this way, the system can better utilize its ayailable bandwidth resources by taking advantage of a satellite telecommunication network's ability to multicast data content to data users. By identifying a multitude of data users who desire particular data content and being able to transmit the data content to them in a single transmission, the use of the system's available bandwidth resources can be better utilized. There are many ways in which this can be accomplished. In some embodiments, the identification of the digital data content to be queued will be determined by evaluating the likelihood that other data users might desire the digital data content requested by single data user. In other embodiments the identification of the digital data content to be queued is made independent of whether a data user has requested a particular digital data content. In both of these approaches, the queuing engine 72's predetermined time for releasing a queued digital data content may be based upon historical data user traffic patterns. For example, queued digital data content may be released for transmission to data users in the early morning hours when data user demand upon the system is traditionally at its lowest. Furthermore, in other embodiments of the invention, the queuing engine 72's predetermined time for releasing a queued digital data content may be dependent upon either the bandwidth resources available within the system or upon the size of the queued digital data content.

When the identification of digital data content to be queued is predicated upon a data user requesting such digital data content, the queuing engine 72 of the data content manager 12 may queue the identified digital data content for a fixed length of time measured from the time at which a data user's request for that digital data content is received. Alternatively, the queuing engine 72 may queue the digital data content until a predetermined time wherein the predetermined time, as measured from the time at which the initial data user request is received, is dependent upon the bandwidth resources available within the system or upon the size of said requested digital data content. Or the queuing engine 72 may queue the digital data content until a predetermined time wherein the predetermined time for the transmission of the requested digital data, as discussed above, is based upon historical data user traffic patterns.

Referring to the illustrated embodiment of Figure 1 again, the figure further shows the interface of the systems of the present invention with established terrestrial backbone networks. Data content can enter the dial-up router 10 of the telecommunications facility 16 by way of a backbone router 40. In the embodiment shown in Figure 1, the backbone router 40 is a hub (i.e., node) within the World Wide Web (or the Internet) where signals (i.e., data content) from either a European backbone network 34 or a U.S. backbone network 38 pass through. It is understood that linkages with other geographically established backbone systems can be established without departing from the scope of this invention. The embodiment depicted in Figure 1 shows the European backbone network 34 supported by a terabit caching server 42. Signals from the European backbone network 34 are conveyed to the backbone router 40 via a G703 modem 48 that receives El clear channel signals from a facility such as the Luxembourg PTT 44. The embodiment in Figure 1 further shows the U.S. backbone network 38 connected to the telecommunications facility 16 of the present invention via a satellite linkage, shown here with two representative satellite antennas 50 and 52 and a representative satellite 54. It is understood, however, that the systems and methods of the present invention can interface with a plurality of satellites, antennas or networks of the same, including non-wireless systems. In the illustrated embodiment, one satellite antenna 52 interfaces with a satellite modem 58 interconnected to the backbone router 40. A second satellite antenna 50 interfaces with a satellite modem 60 that provides a gateway to the U.S. backbone network 38. In the illustrated embodiment, the satellite modem 60 transmits bidirectional signals that pass through a frame relay switch 62 en route to a router 64 that is connected to the U.S. backbone network 38. Signals passing from the router 64 to the satellite modem 60 can be transmitted at a rate differing from the rate at which signals pass in the opposite direction. It is to be understood that these data rates are illustrative only, to be selected according to the particular application, and that modifications thereof will be readily apparent to those of ordinary skill in the relevant arts.

The operating protocol standard that is employed widely throughout the World Wide Web (Internet Protocol or "IP") may be extended to satellite communication networks, distributed to individual data user terminals 2. Through the address and control fields generated by the telecommunications facility 16, a network of terrestrial and satellite communications facilities as shown in Figure 1 can be dynamically configured and reconfigured to provide instantaneous availability of bandwidth on demand. ranging from relatively low speeds in the kilobit range, up to approximately 35 megabits. The delivery points and delivery terminals may also be selected by the customers and users and automatically signaled to participate in a specified "feed". Said bandwidth may be used at customer or user discretion for video streaming, caching, file down loading, multi-casting, and all manner of multi-media distribution.

In accordance with the principles of the invention, a plurality of types of data content may pass from the communications systems manager 18 to a satellite antenna 30 via a satellite gateway 22, that may interface with a radio-frequency (rf) multiplexer 24 where the rf multiplexer 24 can be utilized to further control the plurality of types of data content transmitted by the telecommunications facility, and a satellite modem 28. The radio-frequency multiplexer 24 transmits the plurality of types of data content to the satellite antenna 30 by way of the satellite modem 28 which provides an interface between the telecommunications facility and a satellite telecommunications network. The satellite antenna 30 transmits a satellite 32. Figure 1 shows, for purposes of illustration, a single satellite antenna 30 and satellite 32. It is understood, however, that the systems and methods of the present invention can interface with a plurality of satellites, antennas or networks of the same. The satellite 32 is capable of receiving the plurality of types of data content transmitted from the telecommunications facility 16 and transmitting the received types of data content to at least one ground-based satellite receiving antenna 4. The ground-based satellite receiving antenna 4 then receives the plurality of types of data content transmitted by the satellite 32 and directs the plurality of types of data content to a data user terminal 2 which is capable of processing and displaying the plurality of received types of data content.

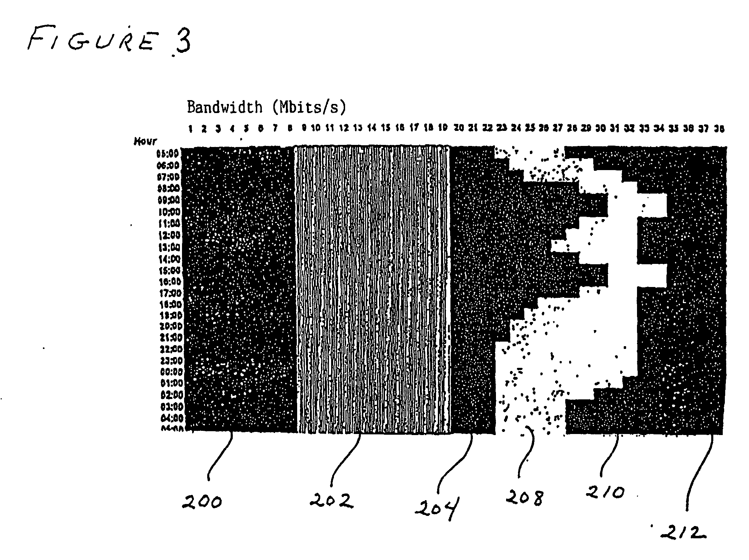

Figure 3 shows an example of how the instantaneous availability of bandwidth on demand according to an embodiment of the present invention can permit improved planning of a satellite telecommunication network's available bandwidth resources. This improved planning of usage can be advantageous for certain Internet applications, including multimedia distribution and e-commerce, as well as for delivering streaming digital data content and file transfers of digital data content. Figure 3 provides a graph that shows an illustrative deployment of a satellite's available bandwidth resources over a selected twenty-four hour period. The y-axis is calibrated to show a twenty-four hour day. The x-axis legend at the top of the graph is calibrated to show a range of bandwidths from 1 through 38 Mbits/sec. Representative bandwidth utilizations across hours of the day are shown schematically at 200, 202, 204, 208, 210 and 212. The area on the graph of Figure 3 designated 200 can indicate a bandwidth segment that provides streamed digital video data content at a rate of 8 Mbits/sec which is constant throughout the selected 24 hour period. In one embodiment, a MPEG 4 protocol may be used to provide this data content access. The area on the graph of Figure 3 designated 202 can indicate a bandwidth segment that provides streamed digital audio data content at a rate of 12 Mbits/sec which is constant throughout the selected 24 hour period. The area on the graph of Figure 3 designated 204 can represent corporate demands of Internet data content at rates ranging from 3 to 10 Mbits/sec throughout the selected 24 hour period. This area 204 illustrates the variability of bandwidth utilization for this purpose at different times of the day. In an exemplary situation, between 15 and 50 data users may be actively downloading at 200 K/bits, consistent with a data user base between 240 and 800 subscribers. The area on the graph of Figure 3 designated 208 can represent corporate demand of Internet data content at rates ranging from 2 to 10 Mbits/sec, which correlates with a set of between 35 and 178 data users actively downloading at 56 Kbits/sec, and which is consistent with a data user base of between 580 and 2850 subscribers. This area 208 illustrates the variability of bandwidth utilization for this purpose at different times of the day. The area on the graph of Figure 3 designated 210 depicts bandwidth availability across time for scheduled downloads from 2 to 10 Mbits/sec. There is also available an area of bandwidth, generally shown at 212, that is allocated to system overhead of 2 Mbits/sec. These deployments of bandwidth utilization across time as depicted in Figure 3 are intended to be illustrative only. It is understood that those of ordinary skill in the relevant arts will be able to envision a plurality of planning strategies that combine the availability of bandwidths at designated time intervals to meet the needs of a particular pool of data users.

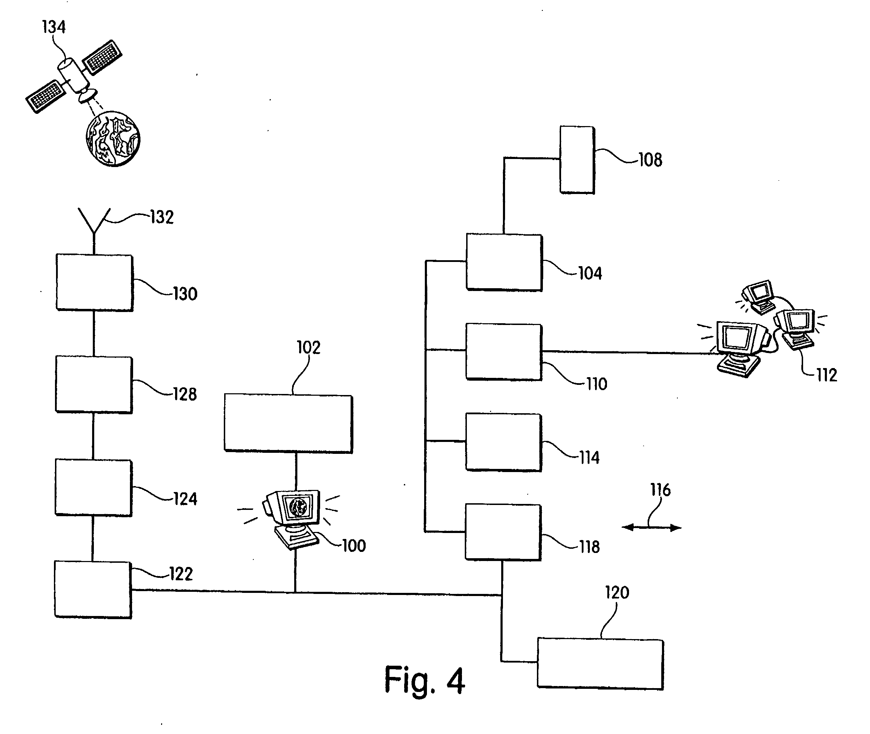

Figure 4 shows a functional block diagram of an embodiment of a system according to the present invention that interrelates terrestrial and satellite communications. Figure 4 depicts a communications systems manager 100 that regulates and directs the passage of data content through a gateway router 102 (where the gateway router 102 represents the dial-up modem 8, the dial-up router 10, the satellite gateway 22, and satellite modem 28 from Figure 1). The communications systems manager 100 can include a server (not shown) and proprietary software. Together the systems management controller 100 and the gateway router 102 manage the reception of data content from various inputs (examples shown here at 104, 110, 114 and 118) and manage the transmission of a plurality of data content towards a satellite antenna 132. Through a series of address and control fields generated by the communications systems manager 100, the network structure can be dynamically configured to provide multi-layer addressing and device selectivity, thereby enabling the creation on demand of specifically configured network distribution points and participants. Where necessary, the communications systems manager 100 may arrange the information queues in accordance with the control algorithms that have been specified for the network. This same system of control algorithms can provide the configuration and reconfiguration of the space segment, as shown in Figure 3, so as to maintain continuous highly efficient use of space distribution capabilities.

The communications systems manager 100 also can regulate. through software control, the multiplicity of data content inputs as shown in Figure 4. A plurality of types of data content can be received into the communications systems manager 100 from a variety of sources. In the illustrated embodiment, data content can be received from terrestrial data caches 104 which in turn can accept data content from a master cache 108 that cooperates with caches (not shown) of terrestrial partners. Data content can be received from line input sources 110, shown here as connected to remote Internet networks 112. Data content can be received from line connections 114 to third parties. Data content can be received from satellite sources 118 via KU band and future KA band, and can be transmitted thereunto, this bidirectionality being indicated by the double headed arrow at 116. Signals to and from satellite sources 118 can be directed by a separate control system 120 that is in communication with the communications systems manager 100. The communications systems manager 100 can likewise affect the flow of data content from satellite sources 118 into a video server 122, wherefrom data content can be transmitted along an uplink path to a satellite antenna site 132. The satellite antenna site 132 is shown in this figure to be in communication with a satellite 134. It is understood, however, that the systems and methods of the present invention can include a plurality of satellite antenna sites, satellites or networks of the same. The data content transmitted to the video server 122 from satellite sources 118 may take the form of broadcast data content. Data content emerging from the gateway router 102 may be optionally directed into a rf multiplexer 124 to be passed to the satellite antenna site 132. A rf multiplexer 124 can direct data content to a modulator 128 and thence to a transmitter 130 that comprises the satellite antenna site 132. If a multiplexer 124 is not employed, data content can pass directly from the gateway router 102 to the modulator 128.

In one embodiment, the systems according to the present invention can include an apparatus adapted for interface with the consumer's television set or PC to comprise a data user terminal. This apparatus may include both devices and software. As an example, Figure 5 provides a diagram of certain features of such a data user terminal. Figure 5 shows a block diagram of an embodiment of a data user terminal 300 according to the systems of the present invention. The data user terminal 300 can be in the form of a PC, a set top box or an Internet box. The data user terminal 300 can comprise a receiver card 308, an ISDN adapter 310 and a software system, depicted diagrammatically generally at 312. The software system 312 can include a stack of interacting layers such as described by the OSI protocol. Figure 5 shows one embodiment of a software system 312, comprising an Internet protocol (IF) layer 314, an UDP/TCP data transfer layer 318 and a data services layer 320, which may include proprietary software for signal processing or for other data processing. In the illustrated embodiment, a monitor 302 and a speaker 304 are shown in communication with the receiver card 308. Figure 5 shows a flow of data from a satellite system 322 into the data user terminal 300 entering the receiver card 308 and passing therefrom into the software system 312. Data content entering the software system 312 pass from the IP layer 314 to the data transfer layer 318 to the data services layer 320. After being processed at the data services layer 320, data content passes through the data transfer layer 318 to the IP layer, to exit the software system 312. Processed data content may then be routed to an ISDN adapter 310 which interfaces with an ISDN 324. Requests for data content transmission can be sent from the consumer data user terminal 300 to the ISDN 324. Responses to such requests can be transmitted from the satellite system 322 into the data user terminal 300. It is understood that the satellite system 322 may comprise satellite receivers, satellites and networks thereof. While the arrangement of components shown in Figure 5 represents an illustrative embodiment according to the systems of the present invention, it is understood that other arrangements can be envisioned by those of ordinary skill in the relevant arts without departing from the scope of the present invention.

The many features and advantages of the present invention can be appreciated from the foregoing description. The specification above provides descriptions of certain embodiments of the present invention to demonstrate its features and advantages more fully. However, since numerous modifications and changes will be apparent to those of ordinary skill in the art, it is not desired to limit the invention to the exact construction and operation as described above. A person skilled in the networking art will readily determine that there are changes and modifications which may extend the usefulness and application of the present invention. Hence, all suitable modifications and equivalents are understood as falling within the scope of the invention.

Accordingly, it will be understood that the invention is not to be limited to the embodiments disclosed herein, but is to be understood from the following claims.

## Claims

1. A system for delivering data content, the system including:
a telecommunications facility (16) for receiving data content from a communications network (34, 38) and transmitting data content to a satellite communications network (4, 32), the telecommunications facility including
a data content manager (12) for managing reception of data content and monitoring requests from data users for data content, the data content manager including
a queuing engine (72) for placing data content requested by a first data user (2) in a queue for transmitting data content, and
a generator (74) for generating, in response to queuing the data content requested by the first data user, a message to be broadcast to data users informing the data users that the queued data content will be transmitted at a predetermined time and inviting the data users to request before the predetermined time, the queued data content; and
a satellite communications network (4, 32) for receiving the queued data content from the telecommunications facility (16) and transmitting the queued data content to the first data user (2) and the data users who requested the queued data content.

2. The system of claim 1, wherein the data content includes at least one of: Internet Protocol data packets, digital data content, and streaming digital data content.

3. The system of claim 1, wherein the queuing engine (72) places data content in the queue for a fixed length of time.

4. The system of claim 1, wherein the queuing engine (72) places data content in the queue for a length of time based on a bandwidth available in the system.

5. The system of claim 1, wherein the queuing engine (72) places data content in the queue for a length of time based on a size of the requested data content.

6. The system of claim 1, wherein the queuing engine (72) places data content in the queue for a length of time based on a historical user traffic pattern.

7. The system of claim 1, wherein the satellite communications network (4, 32) multicasts the queued data content to the first data user (2) and a second data user who requested the queued data content.

8. A method for delivering data content via a satellite communications network (4, 32), the method including:
monitoring requests from data users for data content,
placing data content requested by a first data user (2) in a queue for transmitting data content,
in response to queuing the data content requested by the first data user, broadcasting to the data users a message informing the data users that the queued data content will be transmitted at a predetermined time and inviting the data users to request before the predetermined time the queued data content;
receiving a request for the queued data content from a second data user, and
transmitting the queued data content at the predetermined time to the first data user (2) and the requesting second data user.

9. The method of claim 8, wherein the data content includes at least one of: Internet Protocol data packets, digital data content, and streaming digital data content.

10. The method of claim 8, wherein placing includes:
placing data content in the queue for a fixed length of time.

11. The method of claim 8, wherein placing includes:
placing data content in the queue for a length of time based on an available bandwidth.

12. The method of claim 8, wherein placing includes:
placing data content in the queue for a length of time based on a size of the requested data content.

13. The method of claim 8, wherein queuing includes:
placing data content in the queue for a length of time based ona historical user traffic pattern.

14. The method of claim 8, wherein transmitting the queued data content includes:
transmitting via the satellite communications network (4, 32) the queued data content to the first data user (2) and the requesting second data user.

15. The method of claim 14, wherein transmitting the queued data content includes:
multicasting via the satellite communications network (4, 32) the queued data content to the first data user (2) and the requesting second data user.

## Patentansprüche

1. System zum Liefern von Dateninhalt, wobei das System einschließt:
eine Telekommunikationseinrichtung (16) zum Empfangen von Dateninhalt von einem Kommunikationsnetz (34, 38) und Senden von Dateninhalt an ein Satellitenkommunikationsnetz (4, 32) wobei die Telekommunikationseinzichtung einschließt:
einen Dateninhalt-Verwalter (12) zum Verwalten eines Empfangs von Dateninhalt und zum Überwachen von Anforderungen von Dateninhalt von Datenbenutzem, wobei der Dateninhalt-Verwalter einschließt:
einen Warteschlangen-Motor (72), um Dateninhalt, der von einem ersten Datenbenutzer (2) angefordert wird, in eine Warteschlange zum Senden von Dateninhalt zu platzieren, und
einen Generator (74), um im Ansprechen auf eine Einreihung des Dateninhalts, der von dem ersten Datenbenutzer angefordert wird, in einer Warteschlange eine Nachricht zu erzeugen, die an Datenbenutzer ausgesendet werden soll und die Datenbenutzer darüber informiert, dass der in die Warteschlange eingereihte Dateninhalt zu einer gegebenen Zeit gesendet werden wird, und die Datenbenutzer einlädt vor der vorgegebenen Zeit den in die Warteschlange eingereihten Dateninhalt anzufordern; und
ein Sattelitenkommunikafionsnetz (4, 32) zum Empfangen des in die Warteschlange eingereihten Dateninhalts von der Telekommunikationseinrichtung (16) und Senden des in der Warteschlange eingereihten Dateninhalts an den ersten Datenbenutzer (2) und die Datenbenutzer, die den in der Warteschlange eingereihten Dateninhalt angefordert haben.

2. System nach Anspruch 1, wobei der Dateninhalt wenigstens eines von: Intemet-Protokoll-Datenpakete, Digitaldateninhalt, und Streaming-Digitaldateninhalt einschließt.

3. System nach Anspruch 1, wobei der Warteschlangen-Motor (72) Dateninhalt in die Warteschlange für eine feste Zeitlänge platziert.

4. System nach Anspruch 1, wobei der Warteschlangen-Motor (72) Dateninhalt in die Warteschlange für eine Zeitlänge auf Grundlage einer Bandbreite, die in dem System verfügbar ist, platziert.

5. System nach Anspruch 1, wobei der Warteschlangen-Motor (72) Dateninhalt in der Warteschlange für eine Zeitlänge auf Grundlage einer Größe des angeforderten Dateninhalts platziert.

6. System nach Anspruch 1, wobei der Warteschlangen-Motor (72) Dateninhalt in der Warteschlange für eine Zeitlänge auf Grundlage eines historischen Benutzerverkehrsmusters platziert,

7. System nach Anspruch 1, wobei das Satellitenkommunikationsnetz (4, 32) ein Multicasting des in der Warteschlange eingereihten Dateninhalts an den ersten Datenbenutzer (2) und einen zweiten Datenbenutzer, der den in die Warteschlange eingereihten Dateninhalt angefordert hat, ausführt.

8. Verfahren zum Liefern von Dateninhalt über ein Satellitenkommunikationsnetz (4, 32), wobei das Verfahren die folgenden Schritte einschließt:
Überwachung von Anforderungen von Dateninhalt von Datenbenutzem;
Platzieren von Dateninhalt, der von einem ersten Benutzer (2) angefordert wird, in einer Warteschlange zum Senden von Dateninhalt;
im Ansprechen auf die Einreihung des Dateninhalts, der von dem ersten Datenbenutzer angefordert wird, in einer Warteschlange, Aussenden, an die Datenbenutzer, einer Nachricht, die die Darenbenutzer darüber informiert, dass der in die Warteschlange eingereihte Dateninhalt zu einer vorgegebenen Zeit gesendet werden wird, und die Datenbenutzer einlädt vor der vorgegebenen Zeit den in der Warteschlange eingereihten Dateninhalt anzufordern;
Empfangen einer Anforderung des in die Warteschlange eingereihten Dateninhalts von einem zweiten Datenbenutzer, und
Senden des in der Warteschlange eingereihten Dateninhalts zu der vorgegebenen Zeit an den ersten Datenbenutzer (2) und den anfordernden zweiten Datenbenutzer.

9. Verfahren nach Anspruch 8, wobei der Dateninhalt wenigstens eines von: Internet-Protokoll-Datenpakete, Digitaldateninhalt, und Streaming-Digitaldateninhalt einschließt.

10. Verfahren nach Anspruch 8, wobei das Platzieren einschließt:
Platzieren von Dateninhalt in der Warteschlange für eine feste Zeitlänge.

11. Verfahren nach Anspruch 8, wobei das Platzieren einschließt:
Platzieren von Dateninhalt in der Warteschlange für eine Zeitlänge auf Grundlage einer verfügbaren Bandbreite.

12. Verfahren nach Anspruch 8, wobei das Platzieren einschließt:
Platzieren von Dateninhalt in der Waneschlange für eine Zeitlänge auf Grundlage einer Größe des angeforderten Dateninhalts.

13. Verfahren nach Anspruch 8, wobei das Einreihen in der Warteschlange einschließt:
Platzieren von Dateninhalt in die Warteschlange für ein ZeitIänge auf Grundlage eines historischen Benutzerverkehrsmusters.

14. Verfahren nach Anspruch 8, wobei das Senden des in der Warteschlange eingereihten Dateninhalts einschließt:
Senden des in der Warteschlange eingereihten Dateninhalts an den ersten Datenbenutzer (2) und den anfordernden zweiten Datenbenutzer über das Satellitenkommunikationsnetz.

15. Verfahren nach Anspruch 14, wobei das Senden des in der Warteschlange eingereihten Dateninhalts einschließt:
Ausführen eines Multicasting des in der Warteschlange eingereihten Dateninhalts an den ersten Datenbenutzer (2) und den anfordernden zweiten Datenbenutzer über das Satellitenkommunikationsnetz (4, 32).

## Revendications

1. Système pour délivrer un contenu de données, le système incluant:
une installation de télécommunication (16) pour recevoir un contenu de données depuis un réseau de communication (34, 38) et pour émettre le contenu de données jusqu'à un réseau de communication par satellite (4, 32), l'installation de télécommunication incluant:
un gestionnaire de contenu de données (12) pour gérer la réception d'un contenu de données et pour surveiller des demandes en provenance d'utilisateurs de données quant à un contenu de données, le gestionnaire de contenu de données incluant:
un moteur de mise en file d'attente (72) pour placer un contenu de données qui est demandé par un premier utilisateur de données (2) dans une file d'attente pour émettre un contenu de données; et
un générateur (74) pour générer, en réponse à la mise en file d'attente du contenu de données qui est demandé par le premier utilisateur de données, un message à diffuser sur des utilisateurs de données qui informe les utilisateurs de données du fait que le contenu de données mis en file d'attente sera émis à un temps prédéterminé et qui invite les utilisateurs de données à demander avant le temps prédéterminé le contenu de données mis en file d'attente; et
un réseau de communication par satellite (4, 32) pour recevoir le contenu de données mis en file d'attente depuis l'installation de télécommunication (16) et pour émettre le contenu de données mis en file d'attente sur le premier utilisateur de données (2) et sur les utilisateurs de données qui ont demandé le contenu de données mis en file d'attente.

2. Système selon la revendication 1, dans lequel le contenu de données inclut au moins un élément pris parmi: des paquets de données de protocole Internet, un contenu de données numériques et un contenu de données numériques en train continu.

3. Système selon la revendication 1, dans lequel le moteur de mise en file d'attente (72) place un contenu de données dans la file d'attente pendant une durée temporelle fixe.

4. Système selon la revendication 1, dans lequel le moteur de mise en file d'attente (72) place un contenu de données dans la file d'attente pendant une durée temporelle qui est basée sur une largeur de bande qui est disponible dans le système.

5. Système selon la revendication 1, dans lequel le moteur de mise en file d'attente (72) place un contenu de données dans la file d'attente pendant une durée temporelle qui est basée sur une dimension du contenu de données demandé.

6. Système selon la revendication 1, dans lequel le moteur de mise en file d'attente (72) place un contenu de données dans la file d'attente pendant une durée temporelle qui est basée sur un motif de trafic d'utilisateur historique.

7. Système selon la revendication 1, dans lequel le réseau de communication par satellite (4, 32) multi-diffuse le contenu de données mis en file d'attente sur le premier utilisateur de données (2) et sur un second utilisateur de données qui a demandé le contenu de données mis en file d'attente.

8. Procédé pour délivrer un contenu de données via un réseau de communication par satellite (4, 32), le procédé incluant:
la surveillance de demandes en provenance d'utilisateurs de données quant à un contenu de données;
le placement d'un contenu de données qui est demandé par un premier utilisateur de données (2) dans une file d'attente pour émettre le contenu de données;
en réponse à la mise en file d'attente du contenu de données qui est demandé par le premier utilisateur de données, la diffusion sur les utilisateurs de données d'un message qui informe les utilisateurs de données du fait que le contenu de données mis en file d'attente sera émis à un temps prédéterminé et qui invite les utilisateurs de données à demander avant le temps prédéterminé le contenu de données mis en file d'attente;
la réception d'une demande pour le contenu de données mis en file d'attente de la part d'un second utilisateur de données; et
l'émission du contenu de données mis en file d'attente au temps prédéterminé sur le premier utilisateur de données (2) et sur le second utilisateur de données formulateur de demande.

9. Procédé selon la revendication 8, dans lequel le contenu de données inclut au moins un élément pris parmi: des paquets de données de protocole Internet, un contenu de données numériques et un contenu de données numériques en train continu..

10. Procédé selon la revendication 8, dans lequel le placement inclut le placement d'un contenu de données dans la file d'attente pendant une durée temporelle fixe.

11. Procédé selon la revendication 8, dans lequel le placement inclut le placement d'un contenu de données dans la file d'attente pendant une durée temporelle sur la base d'une largeur de bande disponible.

12. Procédé selon la revendication 8, dans lequel le placement inclut le placement d'un contenu de données dans la file d'attente pendant une durée temporelle qui est basée sur la dimension du contenu de données demandé.

13. Procédé selon la revendication 8, dans lequel une mise en file d'attente inclut le placement d'un contenu de données dans la file d'attente pendant une durée temporelle qui est basée sur un motif de trafic d'utilisateur historique.

14. Procédé selon la revendication 8, dans lequel l'émission du contenu de données mis en file d'attente inclut l'émission via le réseau de communication par satellite (4, 32) du contenu de données mis en file d'attente sur le premier utilisateur de données (2) et sur le second utilisateur de données formulateur de demande.

15. Procédé selon la revendication 14, dans lequel l'émission du contenu de données mis en file d'attente inclut une multi-diffusion via le réseau de télécommunication par satellite (4, 32) du contenu de données mis en file d'attente sur le premier utilisateur de données (2) et sur le second utilisateur de données formulateur de demande.
